# EUROPÄISCHE PATENTSCHRIFT

(11) **EP 2 229 545 B1**
(45) Veröffentlichungstag und Bekanntmachung des Hinweises auf die Patenterteilung: **27.04.2011**
(21) Anmeldenummer: 08869843.6
(22) Anmeldetag: 20.12.2008
(51) Int. Cl.: F16F 9/20, F16F 9/46, E05F 5/10

(54) **DÄMPFUNGSVORRICHTUNG MIT MEHRSTUFIG VERÄNDERLICHER DÄMPFUNGSCHARAKTERISTIK, INSBESONDERE ZUR DÄMPFUNG VON BEWEGLICHEN MÖBELTEILEN**
DAMPING DEVICE WITH MULTISTAGE VARIABLE DAMPING CHARACTERISTICS, PARTICULARLY FOR DAMPING MOVEABLE FURNITURE PARTS
DISPOSITIF D'AMORTISSEMENT À CARACTÉRISTIQUE D'AMORTISSEMENT VARIABLE EN PLUSIEURS PALIERS, EN PARTICULIER POUR L'AMORTISSEMENT D'ÉLÉMENTS MOBILES DE MEUBLES

(30) Priorität: 11.01.2008 DE 202008000455 U
(43) Veröffentlichungstag der Anmeldung: 22.09.2010
(73) Patentinhaber: Grass GmbH & Co. KG, 64354 Reinheim (DE)
(72) Erfinder: SCHNEIDER, Gabriele, 64407 Fränkisch-Crumbach (DE); HERPER, Markus, 64367 Mühltal (DE)
(74) Vertreter: Dobler, Markus
(86) Internationale Anmeldenummer: PCT/EP2008/011166
(87) Internationale Veröffentlichungsnummer: WO 2009/086922

(56) Entgegenhaltungen:
- DE-A1- 4 408 292
- DE-A1- 10 300 732
- JP-A- 10 205 570
- US-A- 5 341 905

## Beschreibung

Die Erfindung betrifft eine Dämpfungsvorrichtung, insbesondere zur Dämpfung der Bewegung von beweglichen Möbelteilen von Möbelstücken, mit einem in einem Gehäuse längsverschieblich gelagerten Kolben, welcher in Abhängigkeit von seiner Verschiebungsstellung auf gegenüberliegenden Seiten zwei größenveränderliche, mit einem fluiden Dämpfungsmedium gefüllte Arbeitsräume bildet, welche über wenigstens eine Überström-Verbindung einen gedrosselten Übertritt des Dämpfungsmediums zwischen den beiden Arbeitsräumen ermöglicht, wobei auf einer Seite des Kolbens eine aus dem zugeordneten stirnseitigen Ende des Gehäuses abgedichtet herausgeführte Kolbenstange angeschlossen ist, über deren kolbenabgewandtes äußeres Ende die Bewegung des zu dämpfenden Möbelteils auf den Kolben übertragen wird, wobei auf der dem kolbenstangenseitigen Arbeitsraum gegenüberliegenden Seite des Kolbens ein langgestreckter Einstellschaft mit einem dem Durchmesser der Kolbenstange im Wesentlichen entsprechenden Durchmesser angeschlossen ist, dessen freies Ende ebenfalls abgedichtet aus der der dem kolbenstangenseitig geschlossenen Stirnseite gegenüberliegenden Stirnseite aus dem Gehäuse herausgeführt ist, wobei der Einstellschaft verdrehbar im Kolbens angeordnet ist und eine radial von seiner Umfangsfläche vorspringenden Drosselscheibe aufweist, welche im Bereich eines Endes einer die beiden Arbeitsräume verbindenden, die Überström-Verbindung bildenden Kolben-Durchgangsbohrung an einer Stirnfläche des Kolben anliegt, und die Drosselscheibe mit einer Anzahl von in Umfangsrichtung zueinander versetzten Aussparungen mit unterschiedlichem Durchlassquerschnitt versehen ist, welche durch Verdrehung des Einstellschafts wahlweise mit der im Kolben vorgesehenen, die Arbeitsräume verbindenden Durchgangsbohrung ausrichtbar sind.

Derartige Dämpfungs- oder auch Bremsvorrichtungen dienen im Möbelbau beispielsweise dazu, die beim schnellen schwungvollen Schließen von Türen bzw. Schließen von Schubladen von Schränken bei der stoßartigen Abbremsung des am Korpus anschlagenden beweglichen Möbelteils entstehenden Beanspruchungen und Geräusche zu vermeiden oder doch weitgehend zu verringern. Mit viskosen Flüssigkeiten, wie z. B. Silikonöl, als Dämpfungsmedium arbeitende Dämpfungsvorrichtungen (z. B. DE 10300732 A1) haben gegenüber mit gasförmigen Dämpfungsmedium arbeitenden Vorrichtungen den Vorteil, dass diese flüssigen Dämpfungsmedien praktisch inkompressibel sind, so dass sie keine Rückfederungseigenschaften aufweisen, welche den beweglichen Möbelteil nach Erreichen der Schließstellung wieder etwas aus der eigentlichen Schließstellung zurückzubewegen sucht. Bei der Verwendung solcher Dämpfer tritt das Problem auf, dass die zur Dämpfung des beweglichen Möbelteils zu erzeugenden Dämpfungskräfte auch von der Masse des jeweiligen Möbelteils und dessen Schließgeschwindigkeit abhängen, so dass für unterschiedliche Dämpfungsaufgaben der geforderten Dämpfungscharakteristik entsprechend angepasste unterschiedliche Dämpfer erforderlich sind.

Um diese bekannten Dämpfungsvorrichtungen so auszubilden, dass sie ohne Umbau oder Austausch einzelner Teile auf unterschiedlichen Dämpfungscharakteristiken einstellbar sind, sind in der eingangs erwähnten Weise ausgebildete Dämpfungsvorrichtungen vorgeschlagen worden (z.B. die nachveröffentlichte WO 2008/043441 A, Fig. 14 bis 21), bei welchen die Dämpfungscharakteristik in einer vorgegebenen Anzahl von Stufen, z.B. vierstufig, veränderbar ist, indem durch Verdrehung des Einstellschafts und somit der Drosselscheibe jeweils eine von mehreren Aussparungen mit unterschiedlichem Durchlassquerschnitt in der Drosselscheibe mit der die Arbeitsräume verbindenden Durchlassbohrung im Kolben ausrichtbar ist. Bei dieser - nicht vorveröffentlichten - Dämpfungsvorrichtung ist die Drosselscheibe in der jeweils gewählten Dämpfungsstufe durch einen formschlüssigen Verriegelungseingriff gegen ungewollte Verdrehung gesichert. Zum Umschalten auf eine andere Dämpfungsstufe ist es dabei erforderlich, zunächst diese Verriegelung gegen Verdrehung zu unterbrechen, was durch Längsverschiebung des Einstellschafts entgegen der Vorspannung einer Spannfeder möglich ist. In diesem längs verschobenen Zustand kann der Einstellschaft dann in die gewünschte Dämpfungsstufe verdreht werden. Es ist ersichtlich, dass durch diese Konstruktion zwar eine hohe Sicherheit gegen ungewollte Veränderungen einer eingestellten Dämpfungscharakteristik erreicht wird, dass der Verstellvorgang selbst aber komplex ist und durch das Erfordernis der Ausübung einer Vorspannung und die verschiebliche Lagerung des Einstellschafts auch ein entsprechend erhöhter konstruktiver Aufwand erforderlich ist.

Eine gattungsgemäße Dämpfungsvorrichtung ist aus der JP 10 205570 A bekannt.

Demgegenüber liegt der Erfindung die Aufgabe zugrunde, die bekannte Dämpfungsvorrichtung so weiterzubilden, dass sie ohne Erhöhung des konstruktiven Aufbaus und Verminderung der Sicherheit gegen ungewollte Verstellung der Dämpfungscharakteristik eine mehrstufige Veränderung der Dämpfungscharakteristik nur durch Verdrehung des Einstellschafts ermöglicht.

Ausgehend von einer Dämpfungsvorrichtung der eingangs erwähnten Art wird diese Aufgabe erfindungsgemäß durch eine Dämpfungseinrichtung mit den Merkmalen des Anspruch 1 gelöst, wobei die in der Draufsicht im Wesentlichen kreisförmig begrenzte und zumindest im radial äußeren Randbereich zwei parallel zueinander verlaufende ebenflächige Stirnflächen aufweisende Drosselscheibe gegen Längsverschiebung in Richtung der Längsmittelachse des Einstellschafts gesichert verdrehbar am oder im Kolben gehaltert ist, und dass die Drosselscheibe jeweils in den Ausrichtstellungen der Aussparungen mit der Durchgangsbohrung im Kolben gegen ungewollte Verdrehung sichernde Halteeinrichtungen vorgesehen sind.

In bevorzugter Weiterbildung der Erfindung ist die Ausgestaltung dabei so getroffen, dass die Drosselscheibe einen von ihrer dem vom Einstellschaft durchsetzten Arbeitsraum des Kolbens abgewandten Seite vortretenden Lageransatz aufweist, welcher zwischen zwei am Kolben vorgesehenen federnd in Anlage an seinen Umfang angedrückten Federarmen drehbar gehalten ist.

Dabei ist die Ausgestaltung dann zweckmäßig so getroffen, dass der Lageransatz einen vom Kreisquerschnitt abweichenden, abwechselnd mit in Umfangsrichtung aufeinander folgend ab- bzw. ausgerundeten Vor- und Rücksprüngen versehenen Querschnitt aufweist, und dass die Federarme dann jeweils mit komplementär zur Umfangsfläche des Lageransatzes geformten Anlagebereichen versehen sind. Zum Verdrehen des Einstellschafts muss dann nicht nur die zwischen den Federarmen und dem Lageransatz herrschende Reibung überwunden werden, sondern die Federarme müssen beim Verdrehen des Einstellschafts dann auch unter zusätzlicher Erhöhung der Federvorspannung ausgelenkt werden, bis sie nach Überwindung einer Maximalauslenkung wieder in die der nächstfolgenden Stufe der Dämpfungscharakteristik zugeordnete Position zurückfedern.

Die Drosselscheibe und der Lageransatz können dabei als integraler Bauteil ausgebildet sein, wobei dann zweckmäßig das kolbenstangenseitige Ende des Einstellschafts drehfest mit der Drosselscheibe verbunden ist.

Der Lageransatz kann auch von dem die Drosselscheibe drehfest durchsetzenden kolbenstangenseitigen Ende des Einstellschafts gebildet werden, wobei die die Drosselscheibe in einer gewählten Ausrichtstellung gegen ungewollte Verdrehung sichernde Halteeinrichtungen dann zweckmäßig dadurch gebildet werden, dass die federarmzugewandte Fläche der Drosselscheibe und die drosselscheibenzugewandte Begrenzungsfläche der Federarme mit in Umfangsrichtung zueinander versetzten komplementären Rastvorsprüngen bzw. Rastvertiefungen versehen sind, deren Zahl und Anordnung in Bezug auf die Aussparungen der Drosselscheibe so gewählt sind, dass bei Rasteingriff wenigstens eines Rastvorsprungs in die zugeordnete Rastvertiefung jeweils wenigstens eine der in die der Kolbenstirnfläche zugewandte Stirnfläche der Drosselscheibe eingeformten Vertiefungen mit der die Arbeitsräume verbindenden Durchgangsbohrung im Kolben ausgerichtet ist.

Um den Hub des Kolbens zu optimieren, empfiehlt es sich, den Anlagebereich der Drosselscheibe an der einstellschaftabgewandten Stirnfläche des Kolbens gegenüber der restlichen kolbenstangenseitigen Stirnfläche des Kolbens stufenartig in Richtung auf den vom Einstellschaft durchsetzten Arbeitsraum um ein solches Maß stufenartig zurückzusetzen, dass die drosselscheibenabgewandten Begrenzungsflächen der federnd am Lageransatz angedrückten Federarme die kolbenstangenseitige Stirnfläche des Kolbens nicht überragen.

Die Federarme sind dabei bevorzugt in einem der Dicke der Drosselscheibe im Wesentlichen entsprechenden Abstand parallel zum Anlagebereich der Drosselscheibe an der Kolbenstirnfläche am Kolben angesetzt, und zwar sind die Federarme dabei bevorzugt integraler Teil des Kolbens.

Am äußeren freien Ende des Einstellschafts ist zweckmäßig eine Handhabe vorgesehen, die beispielsweise als im Durchmesser gegenüber dem Schaftdurchmesser des Einstellschafts vergrößerter Drehknopf ausgebildet ist, dessen Umfangsfläche zweckmäßig mit Riefen oder einer Rändelung versehen ist.

In vorteilhafter Weiterbildung kann das Gehäuse und der im Gehäuseinnem längsverschieblich angeordnete Kolben einen von der Kreisquerschnittsform abweichenden ovalen oder von zwei parallelen geradlinigen, an ihren Enden durch Kreisbögen geschlossenen Begrenzungen gebildeten Querschnitt aufweisen. Durch diese sozusagen "zusammengedrückte" Querschnittsform des Gehäuses der Dämpfungsvorrichtung ist es möglich, die Dämpfungsvorrichtung auch in solchen Bereichen eines Möbelstücks anzuordnen, in welchen zwischen den relativ zueinander bewegten Möbelteilen nur ein geringer Abstand herrscht. Als Beispiel sei hier auf den Abstand zwischen der Außenseite einer Schubladenwand und der zugeordneten Innenfläche des Korpus des Schubladenschranks hingewiesen. Die Dämpfungsvorrichtung kann in ihren äußeren Abmessungen in vorteilhafter Weise dadurch optimiert werden, dass die Kolbenstange bezüglich ihrer Längsmittelachse seitlich zur Längsmittelachse des Einstellschafts versetzt in einer Durchgangsöffnung im Kolben gehalten und in dem von der Kolbenstange durchsetzten Bereich der Durchgangsöffnung im Kolben ein Überströmdurchlass ausgebildet ist, wobei im kolbenstangenseitigen Arbeitsraum der Kolbenstange ein Ventilbund zwischen einer auf der Kolbenstirnfläche aufliegenden, den Überströmdurchlass verschließenden in eine von der Kolbenstirnfläche abgehobene, den Überströmdurchlass mit dem kolbenstangenabgewandten Arbeitsraum verbindende Position verschieblich gehaltert ist.

Die Durchgangsöffnung im Kolben weist dabei vorzugsweise einen im Wesentlichen dem Durchmesser der Kolbenstange entsprechenden kreisförmigen Querschnitt auf, der in einem Teilbereich wenigstens eine jeweils eine durchgehende vertiefte, einen Überströmdurchlass bildende Nut in der Durchgangsöffnung ausbildende radiale Durchmesservergrößerung aufweist.

Der Ventilbund ist dabei zweckmäßig als integraler Teil der Kolbenstange ausgebildet.

Die Erfindung ist in der folgenden Beschreibung eines Ausführungsbeispiels in Verbindung mit der Zeichnung näher erläutert, und zwar zeigt:
- Fig. 1: eine Seitenansicht eines ersten Ausführungsbei- spiels einer erfindungsgemäßen Dämpfungsvor- richtung, wobei die Kolbenstange in ganz in das Gehäuse eingeschobener Position dargestellt ist;
- Fig. 2: eine Vorderansicht der Dämpfungsvorrichtung, ge- sehen in Richtung des Pfeils 2 in Fig. 1;
- Fig. 3: eine Schnittansicht durch die Dämpfungsvorrich- tung in der durch die Pfeile 3-3 in Fig. 2 veran- schaulichten Schnittebene;
- Fig. 4: eine isometrische Ansicht des Kolbens sowie der am Kolben angeschlossenen Endbereiche der Kol- benstange und des Einstellschafts der Dämpfungs- vorrichtung;
- Fig. 5: eine Schnittansicht, gesehen in Richtung der Pfeile 5-5 in Fig. 4;

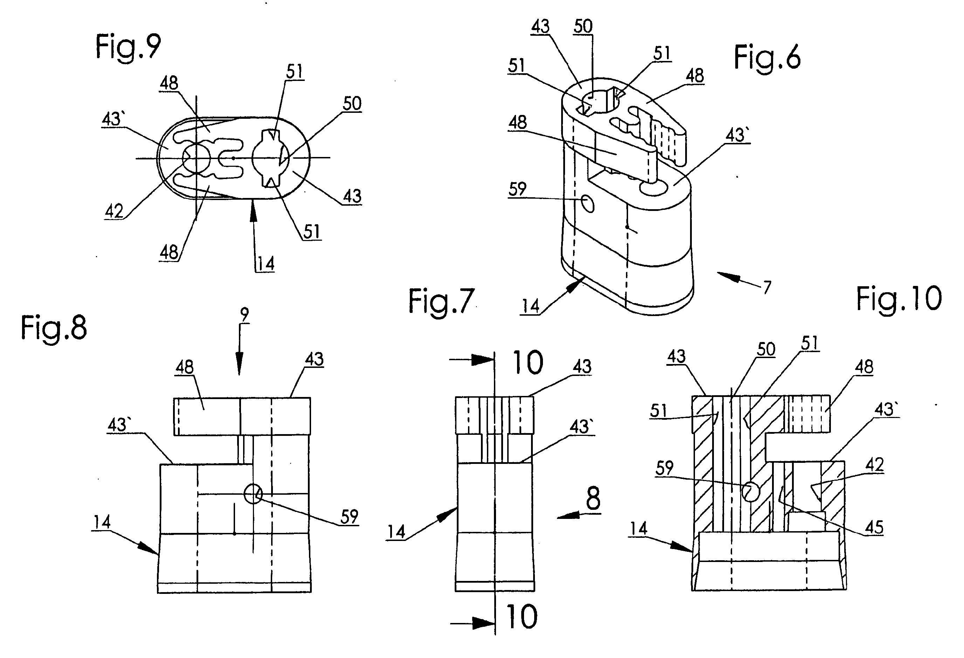

- Fig. 6: eine isometrische Ansicht des Kolbens der Dämp- fungsvorrichtung ohne Kolbenstange und Einstell- schaft;
- Fig. 7: eine Vorderansicht des Kolbens, gesehen in Rich- tung des Pfeils 7 in Fig. 6;
- Fig. 8: eine Ansicht des Kolbens, gesehen in Richtung des Pfeils 8 in Fig. 7;
- Fig. 9: eine Draufsicht auf den Kolben, gesehen in Rich- tung des Pfeils 9 in Fig. 8;
- Fig. 10: eine Schnittansicht durch den Kolben, in der durch die Pfeile 10-10 in Fig. 7 veranschaulichten Schnitt- ebene;
- Fig. 11: eine isometrische Ansicht einer im Kolben verdreh- bar angeordneten Drosselscheibe;
- Fig. 12: eine Seitenansicht der Drosselscheibe, gesehen in Richtung des Pfeils 12 in Fig. 11;
- Fig. 13: eine Schnittansicht entlang der Pfeile 13-13 in Fig. 12;
- Fig. 14: eine Draufsicht auf die Drosselscheibe, gesehen in Richtung des Pfeils 14 in Fig. 12; und
- Fig. 15: eine Unteransicht der Drosselscheibe, gesehen in Richtung des Pfeils 15 in Fig. 12.

Das in den Zeichnungsfiguren 1 bis 3 dargestellte, in seiner Gesamtheit mit 10 bezeichnete Ausführungsbeispiel der erfindungsgemäßen Dämpfungsvorrichtung weist ein Gehäuse 12 auf, welches - abweichend von bekannten Dämpfungsvorrichtungen mit einem hohl zylindrischen und daher in der Regel auch kurz als "Zylinder" bezeichneten Gehäuse versehenen Dämpfungsvorrichtungen - einen von zwei voneinander beabstandeten parallelen geradlinigen und an ihren Enden durch halbkreisförmige Begrenzungslinien verbundenen Begrenzungskanten gebildeten Querschnitt aufweist.

Im hohlen Innern des Gehäuses 12 ist dementsprechend ein Kolben 14 mit zum Gehäuseinnem komplementär geformtem Querschnitt verschieblich eingesetzt.

Das Gehäuse 12 ist an seinem in den Zeichnungsfiguren am unteren Ende durch eine integrale Stirnwand 20 und an seinem oberen Ende durch einen gesonderten, im Gehäuse 12 befestigten Gehäusedeckel 22 geschlossen, wodurch im Gehäuseinnem auf gegenüberliegenden Seiten der Stirnflächen des Gehäuses 14 jeweils ein Arbeitsraum 24 bzw. 26 entsteht, welche mit flüssigem Dämpfungsmedium gefüllt sind.

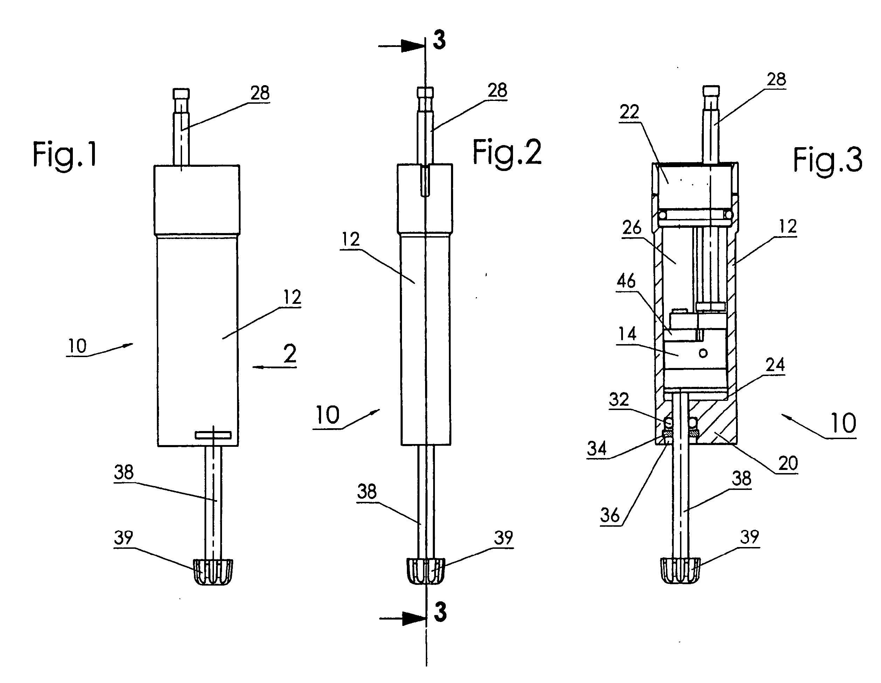

Eine abgedichtet durch den Gehäusedeckel 22 hindurchgeführte und an ihrem gehäuseinneren Ende mit dem Kolben 14 verbundene Kolbenstange 28 überträgt von dem zu dämpfenden beweglichen Möbelteil in ihr freies äußeres Ende eingeleitete Bewegungen auf den Kolben 14, welcher dadurch im Gehäuse 12 verschoben wird, wobei das Volumen der Arbeitsräume 24, 26 - abhängig von der Bewegungsrichtung des Kolbens 14 - jeweils vergrößert bzw. verkleinert wird. In Figur 3 ist die vollständig ins Gehäuse 12 eingeschobene Position der Kolbenstange 28 dargestellt, in welcher der Kolben 14 an der Innenfläche der Stirnwand 20 anliegt, und der Arbeitsraum 24 deshalb in der Darstellung verschwindet. Entsprechend der Veränderung der Volumina der Arbeitsräume muss das im Gehäuse eingeschlossene Dämpfungsmedium von dem sich verkleinernden Arbeitsraum in den gegenüberliegenden sich vergrößernden Arbeitsraum übertreten können. Hierfür sind im Kolben 14 Durchlasskanäle gebildet, deren Ausgestaltung nachstehend noch näher erläutert wird.

Der dem von der Kolbenstange 28 durchsetzten Arbeitsraum 26 gegenüberliegende Arbeitsraum 24 wird von einem seitlich zur Kolbenstange 28 versetzt angeordneten Einstellschaft 38 durchsetzt, der seinerseits durch einen gestuften Durchlass 30 in der Gehäuse-Stirnwand hindurchgeführt und an seinem äußeren freien Ende mit einer Handhabe in Form eines in seiner Umfangsfläche mit Riefen oder einer Rändelung versehenen Drehknopfs versehen ist.Die Abdichtung des Einstellschafts erfolgt durch einen als O-Ring ausgebildeten Dichtring 32, der von einer Ringscheibe 34 und einer anschließenden Zahnscheibe 36 im Durchlass gehalten wird und auf der Umfangsfläche des Einstellschafts 38 abdichtet. Die Abdichtung der Kolbenstange 28 im Gehäusedeckel 22 erfolgt in analoger Weise, was in Figur 3 nicht erkennbar ist, weil der Gehäusedeckel 22 nicht geschnitten dargestellt ist.

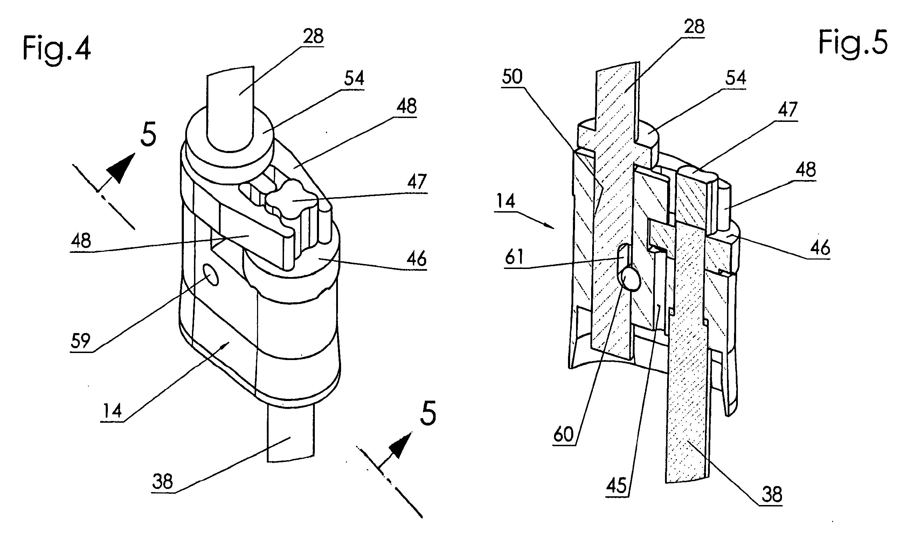

In den Fig. 4 und 5 ist der Kolben 14 mit der an ihm angeschlossenen Kolbenstange 28 und dem Einstellschaft 38 gezeigt, wobei die Schnittdarstellung der Fig. 5 erkennen lässt, dass das kolbenseitige Ende der Kolbenstange 28 in einer Durchgangsöffnung 50 des Kolbens 14 längsverschieblich angeordnet und mittels eines in eine die Durchgangsöffnung tangential durchsetzende Querbohrung 59 im Kolben 14 eingesetzten Stifts 60 gehalten ist. Eine begrenzte Längsverschieblichkeit der Kolbenstange 28 wird dabei dadurch erreicht, dass die vom Stift 60 tangential durchsetzte Vertiefung 61 in der Umfangsfläche der Kolbenstange 28 eine gewisse Längserstreckung in Kolbenstangen-Längsrichtung aufweist, so dass die Kolbenstange 28 sich in dem durch die Längserstreckung der Vertiefung 61 vorgegebenen Rahmen in der Durchgangsöffnung verschieben kann. Die Durchgangsöffnung 50 im Kolben ist nur partiell komplementär zum Durchmesser der Kolbenstange 28 ausgebildet. In zwei diametral gegenüberliegenden Bereichen weist der Durchmesser der Durchgangsöffnung 50 durch über ihre gesamte Länge durchgehende vertiefte Nuten 51 auf, welche also Überströmdurchlässe zwischen den Arbeitsräumen 26, 24 ausbilden. Im Bereich der dem Arbeitsraum 26 zugewandten Stirnfläche 43 des Kolbens 14 ist die Kolbenstange mit einem umlaufenden radial vortretenden Ventilbund 54 versehen, welcher bei Anlage an den Kolben-Stimflächen die von den Nuten 51 gebildeten Überströmdurchlässe verschließt, während sie in der vom der Kolben-Stirnfläche abgehobenen Position ein Übertritt des Dämpfungsmediums zwischen den Arbeitsräumen zulässt.

Der gehäuseinnere Teil des Einstellschafts 38 greift in seinem kolbenseitigen Endbereich durch eine im Kolben 14 vorgesehene Lagerbohrung 42, wobei sein freies Ende drehfest mit einer kreisscheibenförmigen Drosselscheibe 46 verbunden ist, welche radial vom Einstellschaft 38 vorsteht. Die zum Arbeitsraum 24 weisende Stirnfläche der Drosselscheibe 46 ist auf einem zum Arbeitsraum 26 weisenden ebenflächigen, gegenüber der restlichen Stirnfläche 43 stufenartig in Richtung des Arbeitsraums 24 zurückversetzten Teilabschnitt 43' abgestützt, in welchem in Richtung zur Durchgangsöffnung 50 versetzt eine zusätzliche Durchgangsbohrung 45 mündet, die den Kolben 14 durchsetzt und so einen weiteren Verbindungs-Durchlass zwischen den beiden Arbeitsräumen bildet. Diese Durchgangsbohrung 45 wird von der Drosselscheibe 46 über deckt, von welcher ein Lageransatz 47 vorsteht. Dieser Lageransatz 47 ist zwischen zwei am Kolben vorgesehene federnd in Anlage an seine Umfangsfläche angedrückten Federarmen 48 drehbar gehalten, deren dem Stimflächen-Teilabschnitt 43' zugewandte Unterseite auf der ebenflächigen Oberseite der Drosselscheibe 46 aufliegt und so sicherstellen, dass sich die Drosselscheibe 46 in montiertem Zustand nicht vom Stirnflächen-Teilbereich 43' abheben kann. Im speziellen Fall sind die Federarme 48 integral am Kolben 14 angeformt und erstrecken sich in parallelem Abstand zum Stirnflächen-Teilbereich 43', wobei ihre oberen Begrenzungsflächen mit der Stirnfläche 43 fluchten.

Die im Zwischenraum zwischen dem Stirnflächen-Teilbereich 43' und in unteren Begrenzungsflächen der Federarme 48 drehfest auf dem gehäuseinneren Ende des Einstellschafts 38 gehaltene Drosselscheibe 46 ist an ihrer auf dem ebenflächigen Stirnflächen-Teilabschnitt 43' aufliegenden Unterseite mit vier in Umfangsrichtung jeweils um 90° zueinander versetzten, radial verlaufenden Vertiefungen 66a, 66b, 66c und 66d versehen, welche offen in der Umfangsfläche der Drosselscheibe münden und unterschiedliche Breite und Tiefe aufweisen, d.h. unterschiedliche Durchlassquerschnitte bilden.

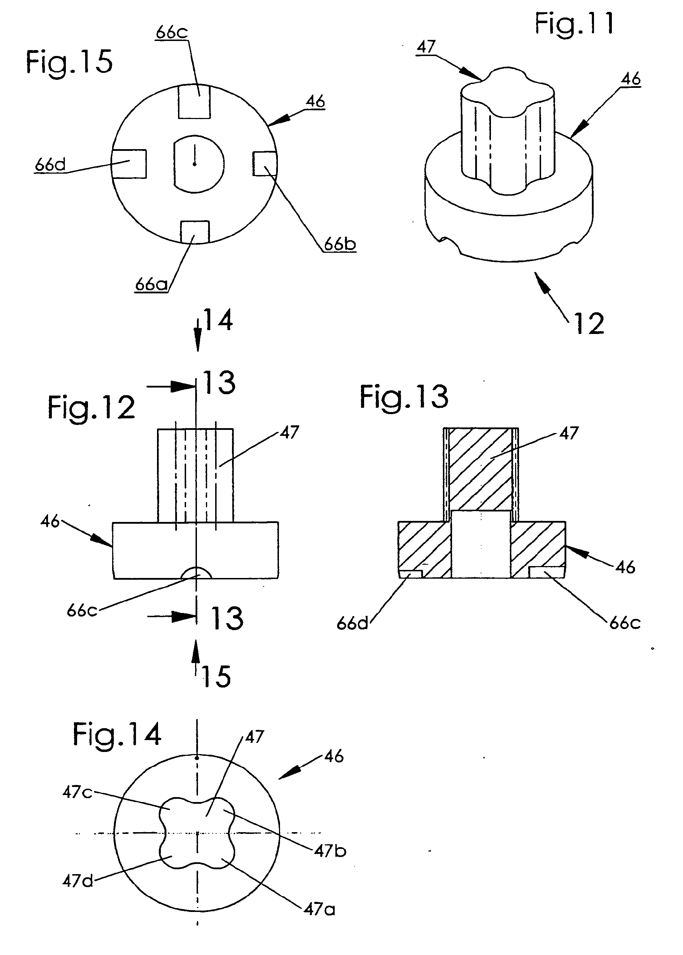

Der mittig integral von der Oberseite der Drosselscheibe 46 vortretende Lageransatz 47 hat - wie insbesondere in den Fig. 11 und 14 erkennbar ist - einen von der Kreisform abweichenden kleeblattähnlichen Querschnitt mit in Umfangsrichtung aufeinander folgenden konvex abgerundeten Vorsprüngen 47a, 47b, 47c und 47d, zwischen denen jeweils konkav ausgerundete Vertiefungen ausgebildet sind. Im Anlagebereich am Lagerzapfen sind die Federarme 48 mit komplementär zu den zwischen den Vorsprüngen 47a bis 47d ausgebildeten Vertiefungen ausgebildeten Vorsprüngen versehen, so dass - je nach Drehstellung der Drosselscheibe 46 - also jeweils in ein Paar von zwischen den Vorsprüngen 47a, 47c bzw. 47b, 47d liegenden Vertiefungen federnd jeweils ein in den Federarm-Anlagebereichen von den Federarmen 48 vortretender komplementär geformter Vorsprung eingreift. Die Ausrichtung der Vorsprünge 47a bis 47d zu den Vertiefungen 66a bis 66d in der Unterseite der Drosselscheibe 46 ist so getroffen, dass in jeder der vier möglichen Drehstellungen der Drosselscheibe 46 jeweils eine der Vertiefungen 66a bis 66d mit der Durchgangsbohrung 45 im Kolben 14 ausgerichtet ist. Aufgrund der unterschiedlichen Durchlassquerschnitte der Vertiefungen 66a bis 66d wird dann also in vom Arbeitsraum 26 über die Vertiefungen 66a bis 66d und die Durchgangsbohrung 45 in den Arbeitsraum 24 - und in umgekehrter Richtung - strömendem Arbeitsmedium eine unterschiedliche Drosselwirkung aufgebaut.

Es ist nunmehr ersichtlich, dass beim beschriebenen Ausführungsbeispiel die Drosselcharakteristik der Dämpfungsvorrichtung jeweils in vier Stufen verstellbar ist, in denen die Drosselscheibe 46 über den Einstellschaft 38 entsprechend verdreht wird.

Dabei ist klar, dass die Stufen durch Änderungen der Anzahl und Lage der Vertiefungen 66a, b, ... in der Unterseite der Drosselscheibe 46 und entsprechende Veränderungen der Anzahl der Vorsprünge 47a, 47c, ... veränderbar ist. Weiter ist ersichtlich, dass die Ausgestaltung der Halteeinrichtung zur Fixierung der Drosselscheibe 46 in gewählten Drosselstufen auch in abweichender Weise verwirklichbar sind. So können beispielsweise in der federarmzugewandten Fläche der Drosselscheibe und den drosselscheibenzugewandten Begrenzungsflächen der Federarme mit in Umfangsrichtung zueinander versetzten komplementären Rastvorsprüngen bzw. Rastvertiefungen versehen sein, deren Zahl und Anordnung in Bezug auf die Vertiefungen in der Unterseite der Drosselscheibe 46 wiederum so gewählt sind, dass bei Rasteingriff wenigstens eines Rastvorsprungs in die zugeordnete Rastvertiefung jeweils eine der in die Unterseite der Drosselscheibe eingeformten Vertiefung mit der die Arbeitsräume verbindenden Durchgangsbohrung im Kolben ausgerichtet ist.

## Patentansprüche

1. Dämpfungsvorrichtung (10), insbesondere zur Dämpfung der Bewegung von beweglichen Möbelteilen von Möbelstücken, mit einem in einem Gehäuse (12) längsverschieblich gelagerten Kolben (14), welcher in Abhängigkeit von seiner Verschiebungsstellung auf gegenüberliegenden Seiten zwei größenveränderliche, mit einem fluiden Dämpfungsmedium gefüllte Arbeitsräume (24; 26) bildet, welche über wenigstens eine Überström-Verbindung einen gedrosselten Übertritt des Dämpfungsmediums zwischen den beiden Arbeitsräumen (24; 26) ermöglicht, wobei auf einer Seite des Kolbens (24) eine aus dem zugeordneten stirnseitigen Ende des Gehäuses abgedichtet herausgeführte Kolbenstange (28) angeschlossen ist, über deren kolbenabgewandtes äußeres Ende die Bewegung des zu dämpfenden Möbelteils auf den Kolben übertragen werden kann, wobei auf der dem kolbenstangenseitigen Arbeitsraum (26) gegenüberliegenden Seite des Kolbens ein langgestreckter Einstellschaft (38) mit einem dem Durchmesser der Kolbenstange (28) im Wesentlichen entsprechenden Durchmesser angeschlossen ist, dessen freies Ende ebenfalls abgedichtet aus der der dem kolbenstangenseitig Stirnwand (22) gegenüberliegenden Gehäuse-Stimwand (20) aus dem Gehäuse (12)herausgeführt ist, **dadurch gekennzeichnet, dass** der Einstellschaft (38) verdrehbar im Kolben (14) angeordnet ist und eine radial von seiner Umfangsfläche vorspringenden Drosselscheibe (46) aufweist, welche im Bereich eines Endes einer die beiden Arbeitsräume verbindenden, die Überström-Verbindung bildenden Kolben-Durchgangsbohrung (45) an einer Stirnfläche des Kolben (14) anliegt, und die Drosselscheibe mit einer Anzahl von in Umfangsrichtung zueinander versetzten Aussparungen mit unterschiedlichem Durchlassquerschnitt versehen ist, welche durch Verdrehung des Einstellschafts (38) wahlweise mit der im Kolben (14) vorgesehenen, die Arbeitsräume verbindenden Durchgangsbohrung (45) ausrichtbar sind,
**dadurch**
dass die in der Draufsicht im Wesentlichen kreisförmig begrenzte und zumindest im radial äußeren Randbereich zwei parallel zu einander verlaufendende ebenflächige Stirnflächen aufweisende Drosselscheibe (46) gegen Längsverschiebung in Richtung der Längsmittelachse des Einstellschafts (38) gesichert, verdrehbar am oder im Kolben (14) gehaltert ist, und
dass die Drosselscheibe (46) jeweils in den Ausrichtstellungen der Aussparungen mit der Durchgangsbohrung (45) im Kolben (14) gegen ungewollte Verdrehung sichernde Halteeinrichtungen vorgesehen sind.

2. Dämpfungsvorrichtung nach Anspruch 1, **dadurch gekennzeichnet, dass** die Drosselscheibe (46) einen von ihrer dem vom Einstellschaft (38) durchsetzten Arbeitsraum (24) des Kolbens (14) abgewandten Seite vortretenden Lageransatz (47) aufweist, welcher zwischen zwei am Kolben (14) vorgesehenen federn in die Anlage an seinen Umfang angedrückten Federarmen (48) drehbar gehalten ist.

3. Dämpfungsvorrichtung nach Anspruch 2, **dadurch gekennzeichnet, dass** der Lageransatz (47) einen vom Kreisquerschnitt abweichenden, abwechselnd mit in Umfangsrichtung aufeinander folgend ab- bzw. ausgerundeten Vorsprüngen (47a; 47b; 47c; 47d) und Vertiefungen versehenen Querschnitt aufweist, und dass die Federarme (48) jeweils mit komplementär zur Umfangsfläche des Lagerzansatzes (47) geformten Anlagebereichen versehen sind.

4. Dämpfungsvorrichtung nach Anspruch 3, **dadurch gekennzeichnet, dass** die Drosselscheibe (46) und der Lageransatz (47) ein integraler Bauteil sind.

5. Dämpfungsvorrichtung nach Anspruch 4, **dadurch gekennzeichnet, dass** das kolbenstangenseitige Ende des Einstellschafts (38) drehfest mit der Drosselscheide (46) verbunden ist.

6. Dämpfungsvorrichtung nach Anspruch 2, **dadurch gekennzeichnet, dass** der Lageransatz von dem die Drosselscheibe (46) drehfest durchsetzenden kolbenstangenseitigen Endes des Einstellschafts (38) gebildet wird.

7. Dämpfungsvorrichtung nach Anspruch 6, **dadurch gekennzeichnet, dass** die federarmzugewandte Fläche der Drosselscheibe (46) und die drosselscheibenzugewandten Begrenzungsflächen der Federarme (48) mit in Umfangsrichtung zueinander versetzten komplementären Rastvorsprüngen bzw. Rastvertiefungen versehen sind, deren Zahl und Anordnung in Bezug auf Aussparungen der Drosselscheibe (46) so gewählt sind, dass bei Rasteingriff wenigstens eines Rastvorsprungs in die zugeordnete Rastvertiefung jeweils wenigstens eine der in die der Kolbenstirnfläche zugewandte Stirnfläche der Drosselscheibe (46) eingeformten Vertiefungen mit der die Arbeitsräume verbindenden Durchgangsbohrung (45) im Kolben ausgerichtet ist.

8. Dämpfungsvorrichtung nach einem der Ansprüche 1 bis 7, **dadurch gekennzeichnet, dass** der Anlagebereich der Drosselscheibe (46) an der einstellschaftabgewandten Stirnfläche (43') des Kolbens (14) gegenüber der restlichen kolbenstangenseitigen Stirnfläche (43) des Kolbens (14) stufenartig in Richtung auf den vom Einstellschaft (38) durchsetzten Arbeitsraum (24) um ein solches Maß zurückgesetzt ist, dass die drosselscheibenabgewandten Begrenzungsflächen der federnd am Lageransatz (47) angedrückten Federarme (48) die kolbenstangenseitige Stirnfläche (43) des Kolbens (14) nicht überragen.

9. Dämpfungsvorrichtung nach Anspruch 8, **dadurch gekennzeichnet, dass** die Federarme (48) in einem der Dicke der Drosselscheibe (46) im Wesentlichen entsprechenden Abstand parallel zum Anlagebereich der Drosselscheibe (46) an der Kolben-Stirnfläche (43') am Kolben (14) angesetzt sind.

10. Dämpfungsvorrichtung nach Anspruch 9, **dadurch gekennzeichnet, dass** die Federarme (48) integraler Teil des Kolbens (14) sind.

11. Dämpfungsvorrichtung nach einem der Ansprüche 1 bis 10 bis, **dadurch gekennzeichnet, dass** am freien Ende des Einstellschafts (38) eine Handhabe vorgesehen ist.

12. Dämpfungsvorrichtung nach Anspruch 11, **dadurch gekennzeichnet, dass** die Handhabe als in seiner Umfangsfläche mit Riefen oder Rändelungen versehener im Durchmesser vergrößerter Drehknopf (39) ausgebildet ist.

13. Dämpfungsvorrichtung nach Anspruche 11 oder 12, **dadurch gekennzeichnet, dass** das Gehäuse (12) und der im Gehäuseinnern längsverschieblich angeordnete Kolben (14) einen von der Kreisquerschnittsform abweisenden ovalen oder von zwei parallelen geradlinigen, an ihren Enden durch Kreisbögen geschlossenen Begrenzungen gebildeten Querschnitt aufweisen.

14. Dämpfungsvorrichtung nach einem der Ansprüche 11 bis 13, **dadurch gekennzeichnet, dass** die Kolbenstange (28) bezüglich ihrer Längsmittelachse seitlich zur Längsmittelachse des Einstellschaft (38) versetzt in einer Durchgangsöffnung (50) im Kolben (14) gehalten ist, und in dem von der Kolbenstange (28) durchsetzten Bereich der Durchgangsöffnung (50) im Kolben (14) ein Überströmdurchlass ausgebildet ist, und dass im kolbenstangenseitigen Arbeitsraum (26) der Kolbenstange (28) ein Ventilbund (54) zwischen einer auf der Kolbenstirnfläche (43) aufliegenden, den Überströmdurchlass verschließenden in eine von der Kolbenstirnfläche abgehobene, den Überströmdurchlass mit dem kolbenstangenabgewandten Arbeitsraum (24) verbindende Position verschieblich gehaltert ist.

15. Dämpfungsvorrichtung nach Anspruch 14, **dadurch gekennzeichnet, dass** die Durchgangsöffnung im Kolben einen im Wesentlichen dem Durchmesser der Kolbenstange entsprechende kreisförmigen Querschnitt aufweist, der in einem Teilbereich wenigstens eine jeweils eine durchgehende vertiefte, einen Überströmdurchlass bildenden Nut in der Durchgangsöffnung ausbildende radiale Durchmesservergrösserung aufweist.

16. Dämpfungsvorrichtung nach Anspruche 14 oder 15, **dadurch gekennzeichnet, dass** der Ventilbund (54) integraler Teil der Kolbenstange (28) ist.

17. Dämpfungsvorrichtung nach einem der Ansprüche 11 bis 16, **dadurch gekennzeichnet, dass** die Aussparungen in der Drosselscheibe (46) von in der der benachbarten Kolbenstirnfläche (43') zugewandten Stirnfläche eingeformten, radial verlaufenden und offen in der Umfangsfläche der Drosselscheibe mündenden Vertiefungen (66a; 66b; 66c; 66d) mit unterschiedlichen Durchlassquerschnitt gebildet werden.

## Claims

1. Damping device (10), In particular for damping the movement of movable furniture parts of pieces of furniture, with a piston (14) which is mounted to be longitudinally dlsplaceable In a housing (12), and which as a function of Its displaced position forms two working chambers (24; 26) of variable size filled with a fluid damping medium on opposite sides, which by way of at least one overflow connection enables a throttled overflow of the damping medium between the two working chambers (24; 26), wherein a piston rod (28) which is led in a sealed manner out of the associated front end of the housing is connected on one side of the piston (24), the movement of the furniture part to be damped being able to be transmitted to the outer end of the piston rod remote from the piston, wherein an elongated adjusting shaft (38) with a diameter corresponding substantially to the diameter of the piston rod (28) Is connected on the side of the piston opposite the piston rod-side working chamber (26), and the free end of the adjusting shaft is likewise led in a sealed manner out of the end face (20) of the housing (12) lying opposite the piston rod-side end wall (22), **characterised in that** the adjusting shaft (38) is disposed rotatably in the piston (14) and has a throttle disc (46) projecting radially from the circumferential surface thereof, which in the region of one end of a piston through bore (45) which connects the two working chambers and forms the overflow connection abuts an end face of the piston (14), and the throttle disc Is provided with a plurality of recesses with different through cross-sections which are offset from one another in circumferential direction and can be aligned selectively by rotation of the adjusting shaft (38) with the through bore (45) which is provided in the piston (14) and connects the working chambers, **in that** the throttle disc (46), which has a substantially circular boundary when viewed from above and at least in the radially outer edge region has two planar end faces extending parallel to one another, is retained rotatably on or In the piston (14) and secured against longitudinal displacement In the direction of the longitudinal central axis of the adjusting shaft (38), and **in that** retaining devices are provided which secure the throttle disc (46) against Inadvertent rotation In the respective alignment positions of the recesses with the through bore (45) in the piston (14).

2. Damping device according to claim 1, **characterised in that** the throttle disc (46) comprises a bearing lug (47) projecting from Its side remote from the working chamber (24) of the piston (14) through which the adjusting shaft (38) passes, which bearing lug Is held rotatably between two spring arms (48) provided on the piston (14) and resiliently pressed against the circumference thereof.

3. Damping device according to claim 2, **characterised in that** the bearing lug (47) has a cross-section which differs from a circular cross-section and is provided with rounded projections (47a; 47b; 47c; 47d) and recesses which alternate in succession In circumferential direction, and **in that** the spring arms (48) are provided respectively with contact areas which are shaped so as to be complementary to the circumferential surface of the bearing lug (47).

4. Damping device according to claim 3, **characterised in that** the throttle disc (46) and the bearing lug (47) are an integral component.

5. Damping device according to claim 4, **characterised i**n that the piston rod-side end of the adjusting shaft (38) is connected In a non-rotatable manner to the throttle disc (46).

6. Damping device according to claim 2, **characterised i**n that the bearing lug is formed by the piston-rod side end of the adjusting shaft (38) which passes In a non-rotatable manner through the throttle disc (46).

7. Damping device according to claim 6, **characterised in that** the surface of the throttle disc (46) facing the spring arm and the boundary surfaces of the spring arms (48) facing the throttle disc are provided with complementary latching projections or latching recesses offset with respect to one another In circumferential direction, the number of latching projections or latching recesses and the arrangement thereof In relation to recesses in the throttle disc (46) being selected such that when at least one latching projection latches into the associated latching recess In each case at least one of the recesses formed In the end face of the throttle disc (46) facing the end face of the piston Is aligned with the through bore (45) In the piston which connects the working chambers.

8. Damping device according to one of claims 1 to 7, **characterised in that** the contact area of the throttle disc (46) on the end face (43') of the piston (14) remote from the adjusting shaft is set back, in a stepped manner from the rest of the piston rod-side end face (43) of the piston (14) In the direction of the working chamber (24) through which the adjusting shaft (38) passes, by such an amount that the boundary surfaces of the spring arms (48) remote from the throttle disc which are pressed resiliently on the bearing lug (47) do not project over the end face (43) of the piston (14) on the piston rod side.

9. Damping device according to claim 8, **characterised in that** the spring arms (48) are attached to the piston (14) with a spacing corresponding substantially to the thickness of the throttle disc (46) parallel to the contact area of the throttle disc (46) on the piston end surface (43').

10. Damping device according to claim 9, **characterised in that** the spring arms (48) are an integral part of the piston (14).

11. Damping device according to one of claims 1 to 10, **characterised i**n that a handle is provided at the free end of the adjusting shaft (38).

12. Damping device according to claim 11, **characterised i**n that the handle is designed as a rotary knob (39) which Is enlarged in diameter in its circumferential surface with channels or knurling.

13. Damping device according to claim 11 or 12, **characterised i**n that the housing (12) and the piston (14) arranged longitudinally displaceably in the interior of the housing have a cross-section, formed by the circular cross-sectional shape, that Is oval or formed by two parallel straight boundaries closed at their ends by arcs.

14. Damping device according to one of claims 11 to 13, **characterised i**n that the piston rod (28) Is offset In terms of Its longitudinal central axis laterally with respect to the longitudinal central axis of the adjusting shaft (38) and held In a through opening (50) In the piston (14), and In the region of the through opening (50) in the piston (14) through which the piston rod (28) passes an overflow passage Is formed, and that in the piston rod-side working chamber (26) of the piston rod (28) a valve collar (54) Is displaceably retained between a position in which it rests on the piston end face and closes the overflow passage and a position in which it is raised from the piston end face and connects the overflow passage to the working chamber (24) remote from the piston rod.

15. Damping device according to claim 14, **characterised i**n that the through opening in the piston preferably has a circular cross-section which corresponds substantially to the diameter of the piston rod and has In a part-region at least one radial increase in diameter which in each case forms a continuous recessed groove forming an overflow passage In the through opening.

16. Damping device according to claim 14 or 15, **characterised i**n that the valve collar (54) Is an integral part of the piston rod (28).

17. Damping device according to one of claims 11 to 16, **characterised in that** the recesses in the throttle disc (46) are formed by recesses (66a; 66b; 66c; 66d) with different through cross-sections which are formed In the end face facing the adjacent piston end face (43') and open in the circumferential surface of the throttle disc.

## Revendications

1. Dispositif d'amortissement (10), notamment pour amortir le mouvement d'éléments mobiles de pièces de meuble, comportant :
- un piston (14) coulissant longitudinalement dans un boîtier (12), et qui en fonction de sa position de coulissement, forme par des faces opposées, deux chambres de travail (24, 26) de dimensions variables, remplies chacune d'un milieu fluide amortisseur, permettant par au moins une liaison de passage, d'assurer un passage étranglé du fluide amortisseur entre les deux chambres de travail (24, 26),
- un côté du piston (24) comportant une tige de piston (28) sortant de manière étanche de l'extrémité côté frontal associé du boîtier, et dont l'extrémité extérieure, à l'opposé du piston, transmet le mouvement de l'élément de meuble à amortir sur le piston,
- le côté du piston à l'opposé de la chambre de travail (26) du côté de la tige de piston, il y a une tige de réglage (38), allongée, ayant un diamètre correspondant pour l'essentiel au diamètre de la tige de piston (28) et dont l'extrémité libre traverse également de manière étanche la paroi frontale (20) du boîtier (12) à l'opposé de la paroi frontale (22) du côté de la tige de piston,
dispositif **caractérisé en ce que**
- la tige de réglage (38) est montée à rotation dans le piston (14) et comporte un disque d'étranglement (46) venant en saillie radialement de sa surface périphérique, et qui, dans la zone d'une extrémité d'un perçage traversant de piston (45) constituant la liaison de passage reliant les deux chambres de travail, s'applique contre une face frontale du piston (14), et le disque d'étranglement comporte un certain nombre de dégagement décalés les uns des autres dans la direction périphérique et ayant une section de passage différente, et qui, par rotation de l'axe de réglage (38) peuvent être alignés sélectivement avec le perçage traversant (45) prévu dans le piston (14) et reliant les chambres de travail,
- le disque d'étranglement (46) qui, en vue de dessus, a une forme essentiellement circulaire, et qui comporte au moins dans la zone extérieure radiale, deux surfaces frontales planes, parallèles l'une à l'autre, est fixé en coulissement longitudinal dans la direction de l'axe médian de la tige de réglage (38), de manière solidaire en rotation sur ou dans le piston (14), et
- le disque d'étranglement (46) comporte, en position d'alignement, des dégagements avec le perçage traversant (45) du piston (14), des installations de fixation qui bloquent toute rotation accidentelle.

2. Dispositif d'amortissement selon la revendication 1,
**caractérisé en ce que**
le disque d'étranglement (46) comporte un prolongement de palier (47) venant en saillie par rapport au côté opposé à celui de la tige de réglage (38) traversant la chambre de travail (24) du piston (14), et qui est tenu en rotation entre deux bras élastiques (48) du piston (14) appliqués élastiquement, contre sa périphérie.

3. Dispositif d'amortissement selon la revendication 2,
**caractérisé en ce que**
- le prolongement de palier (47) a une section ayant des creux et des parties en saillie arrondies, en relief ou en creux (47a, 47b, 47c, 47d) par rapport à une section circulaire, et qui se succèdent alternativement dans la direction périphérique, et
- les bras élastiques (48) ont chacun des zones d'appui de forme complémentaire à celle de la surface périphérique du prolongement de palier (47).

4. Dispositif d'amortissement selon la revendication 3,
**caractérisé en ce que**
le disque d'étranglement (46) et le prolongement de palier (47) constituent une seule pièce.

5. Dispositif d'amortissement selon la revendication 4,
**caractérisé en ce que**
l'extrémité côté tige de piston de la tige de réglage (38) est reliée solidairement en rotation au disque d'étranglement (46).

6. Dispositif d'amortissement selon la revendication 2,
**caractérisé en ce que**
le prolongement de palier est formé par l'extrémité de la tige de réglage (38) traversant solidairement en rotation le disque d'étranglement (46) par l'extrémité côté tige de piston.

7. Dispositif d'amortissement selon la revendication 6,
**caractérisé en ce que**
la surface du disque d'étranglement (46) tournée vers les bras élastiques et les surfaces limites des bras élastiques (48) tournées vers le disque d'étranglement, comportent des saillies et des cavités complémentaires les unes des autres dans la direction périphérique, et dont le nombre et la disposition sont choisis par rapport aux cavités du disque d'étranglement (46) pour qu'une prise d'enclipage d'au moins une saillie d'enclipage dans la cavité d'enclipage associée, soit chaque fois alignée sur au moins une surface frontale du disque d'étranglement (46) tournée vers la surface frontale du piston et qui aligne les perçages traversants (45) du piston reliant les chambres de travail.

8. Dispositif d'amortissement selon l'une des revendications 1 à 7,
**caractérisé en ce que**
la zone d'appui du disque d'étranglement (46) contre la surface frontale (43') du piston (14), non tournée vers la tige de réglage, par rapport à la surface frontale résiduelle (43) du côté de la tige de piston et appartenant au piston (14), est en retrait par gradin en direction de la chambre de travail (24) en retrait par rapport à la tige de réglage (38), d'une dimension telle que les surfaces limites non tournées vers le disque d'étranglement des bras élastiques (48) appliqués élastiquement contre le prolongement de bras (47), ne dépassent pas la surface frontale (43) du piston (14) du côté de la tige de piston.

9. Dispositif d'amortissement selon la revendication 8,
**caractérisé en ce que**
les bras élastiques (48) sont appliqués avec un intervalle égal pratiquement à l'épaisseur du disque d'étranglement (46), parallèlement à la zone d'appui du disque d'étranglement (46) contre la surface frontale (43') du piston (14).

10. Dispositif d'amortissement selon la revendication 9,
**caractérisé en ce que**
les bras de ressort (48) font corps avec le piston (14).

11. Dispositif d'amortissement selon l'une des revendications 1 à 10,
**caractérisé en ce que**
l'extrémité libre de la tige de réglage (38) comporte une poignée.

12. Dispositif d'amortissement selon la revendication 11,
**caractérisé en ce que**
la poignée est réalisée sous la forme d'une surface périphérique munie de parties moletées ou de moletage, sur une tête de rotation (39) de diamètre agrandi.

13. Dispositif d'amortissement selon la revendication 11 ou 12,
**caractérisé en ce que**
le boîtier (12) et le piston (14) coulissant longitudinalement dans le boitier, ont une section ovale différente d'une section circulaire ou délimitée par deux parallèles droites dont les extrémités sont reliées par des arcs de cercle constituant une frontière fermée.

14. Dispositif d'amortissement selon l'une des revendications 11 à 13,
**caractérisé en ce que**
- l'axe médian longitudinal de la tige de piston (28) est décalé latéralement par rapport à l'axe longitudinal médian de la tige de réglage (38) en étant tenu dans l'orifice traversant (50) du piston (14), et dans la zone de l'orifice traversant (50) traversé par la tige de piston (28) dans le piston (14), on a un passage de débordement, et
- la chambre de travail (26) de la tige de piston (28) du côté de la tige de piston, comporte un collet de soupape (54) tenu de manière coulissante entre une position appliquée contre la surface frontale de piston (43) coupant le passage de débordement et une position relevée par rapport à la surface frontale du piston, tenu de manière coulissante, reliant le passage de débordement à la chambre de travail (24) à l'opposé de la tige de piston.

15. Dispositif d'amortissement selon la revendication 14,
**caractérisé en ce que**
l'orifice de passage dans le piston a une section essentiellement circulaire correspondant au diamètre de la tige de piston et qui dans une zone partielle, présente au moins un agrandissement radial du diamètre constitué par une rainure réalisée dans l'orifice de passage, cette rainure étant en creux pour former un passage de débordement.

16. Dispositif d'amortissement selon la revendication 14 ou 15,
**caractérisé en ce que**
la collerette de soupape (54) fait corps avec la tige de piston (28).

17. Dispositif d'amortissement selon l'une des revendications 11 à 16,
**caractérisé en ce que**
le dégagement dans le disque d'étranglement (46) est formé par des cavités (66a, 66b, 66c, 66d) ayant des sections de passage différentes, formées dans la surface frontale non tournée vers la surface frontale (43') voisine du piston, ces surfaces frontales étant dirigées radialement et elles débouchent dans la surface périphérique du disque d'étranglement.
